# NEUE EUROPÄISCHE PATENTSCHRIFT

(11) **EP 1 926 918 B2**
(45) Veröffentlichungstag und Bekanntmachung des Hinweises auf die Entscheidung über den Einspruch: **12.11.2014**
(45) Hinweis auf die Patenterteilung: 29.07.2009
(21) Anmeldenummer: 07702796.9
(22) Anmeldetag: 16.01.2007
(51) Int. Cl.: F16B 19/14, F16B 5/06

(54) **VERFAHREN ZUM HERSTELLEN EINER NAGELVERBINDUNG SOWIE NAGEL HIERFÜR**
METHOD OF PRODUCING A NAIL CONNECTION, AND NAIL FOR THIS PURPOSE
PROCEDE D'ETABLISSEMENT D'UNE LIAISON CLOUEE ET CLOU POUR CE PROCEDE

(30) Priorität: 17.01.2006 DE 102006002238
(43) Veröffentlichungstag der Anmeldung: 04.06.2008
(73) Patentinhaber: Böllhoff Verbindungstechnik GmbH, 33649 Bielefeld (DE)
(72) Erfinder: DRAHT, Torsten, 33649 Bielefeld (DE); MESCHUT, Gerson, 33649 Bielefeld (DE)
(74) Vertreter: Heyer, Volker
(86) Internationale Anmeldenummer: PCT/EP2007/000339
(87) Internationale Veröffentlichungsnummer: WO 2007/082714

(56) Entgegenhaltungen:
- EP-A2- 1 253 332
- DE-B- 1 019 869
- DE-B3-102004 040 701
- DE-U- 7 226 710
- DE-U1-202006 000 666
- GB-A- 1 275 202
- GB-A- 1 479 600
- 'Bolzensetzen von Stahl-und Aluminiumwerkstoffen' SLV GSI MÜNCHEN Nr. DVS501, 01 November 2000, MÜNCHEN,
- TECHNISCH-WISSENSCHALFTLICHE FACHZEITSCHRIFT DVS DÜSSELDORF: 'Bolzensetzen - Tragverhalten von Bolzen in Baustählen' SCHWEISSEN & SCHNEIDEN Bd. HEFT 9, Seiten 586 - 590
- DEUTSCHES INSTITUT FÜR BAUTECHNIK: 'ALLGEMINE BAUAUFSICHTLICHE ZULASSUNG' Z144456, 21 November 2005 - 30 November 2010, BERLIN,
- 'Spitfire P525L' BEDIENUNGSANLEITUNG 18 Februar 2004, FRANCE SAINT ETIENNE,
- JOCHEN PFAU VHT DARMSTADT: 'UNTERSUCHUNG DER BESFESTIGUNGSTECHNIK MIT BALLISTISCHEN VERBINDUNSMITTELN ZUR RATIONELLEN ERSTELLUNG TRAGENDER TAFELELEMENTE IN STRAHLPROFIL-LEICHTBAUWEISE' VTH Bd. S619, 01 Juli 2003 - 01 Mai 2005, Seiten 1 - 6
- HAHN ORTWIN,TORSTEN DARHT: 'Entwicklung des Bolzensetzens für Blech-Profil-Verbindung im Fahrzeugbau' VERLAG SHAKER 30 Juni 2003 - 30 Juni 2003, AACHEN - ISBN 3 8322-5135-9,

## Beschreibung

Die vorliegende Erfindung betrifft ein Verfahren zum Herstellen einer Nagelverbindung zwischen zwei Bauteilen mittels eines Nagels, der von einem Setzgerät mit hoher Geschwindigkeit in die Bauteile eingetrieben wird.

Dieses Verfahren, auch unter dem Begriff "Bolzensetzen" bekannt, ist ein umformtechnisches Fügeverfahren, bei dem der Nagel (Bolzen) mit hoher Geschwindigkeit in die zu fügenden Bauteile eingetrieben wird. Es hat den Vorteil, dass im Allgemeinen eine einseitige Zugänglichkeit des Fügebereiches ausreicht und häufig Vorlochoperationen vermieden werden können. Das Bolzensetzen findet bereits in vielen Bereichen wie Stahlbau, Fassadenbau, Metallbau, Schiffbau und Bauwirtschaft als verlässliches Fügeverfahren Anwendung.

Aus DE 1 575 152, 1 940 447, 1 500 770 sind beispielsweise Nägel (Setzbolzen) bekannt, die mittels Setzgeräten in Form von pulverkraftbetriebenen Kartuschen in Stahl, Baueisen, Blech und ähnliche metallische Werkstoffe eingetrieben werden. Ein solcher Nagel besteht üblicherweise aus einem Nagelkopf, Nagelschaft und einer ogivalen Nagelspitze, wobei der Schaft mit einer Oberflächenprofilierung in Form von Kreuz- oder Pfeilrandrierungen, wendelförmig verlaufenden Riffelungen und dergleichen versehen sein kann.

Aus DE-GM 72 26 710 sind ein Verfahren nach dem Oberbegriff des Anspruchs 1 und ein Nagel (Bolzen) mit einem Flachkopf, einem zylindrischen Schaft und einer ogivalen Nagelspitze bekannt, der zum Befestigen von Blechen an einem Metallteil von gegenüber dem Blech größerer Stärke dient. Der Nagel wird durch das Blech hindurch in das Metallteil eingeschossen. Im Kopf und/oder im Schaft des Nagels ist eine Ausnehmung zur Aufnahme des beim Einschiessen in das Metallteil aus diesem hervorquellenden Materials vorgesehen. Gemäß einer Ausführungsform dieser Druckschrift ist die Ausnehmung an der Unterseite des Nagelkopfes vorgesehen, so dass der das vorgefertigte Loch umgebende Rand des Bleches von dem verdrängten Material des Metallteils in die Ausnehmung hochgebogen wird. Das Metallteil, dessen Dicke deutlich größer ist als die Länge des Nagels, umschließt die Nagelspitze vollständig. Das in dieser Druckschrift offenbarte Verfahren dient in erster Linie zum Befestigen von Typenschildern an Maschinen. Zum Befestigen von Blechen an Strangpressprofilen mit geschlossenem Querschnitt oder an innenhochdruckumgeformten Bauteilen, wie beispielsweise im Fahrzeugbau erforderlich, ist dieses Fügeverfahren nicht geeignet.

Ein für diesen Anwendungszweck geeignetes Fügeverfahren ist beispielsweise das sogenannte Direktverschrauben, auch als "Flow Drilling Screw (FDS)" bezeichnet. Bei diesem Verfahren (vgl. z.B. DE 102 48 427 A1, DE 39 22 684 A1, DE 39 09 725 C1 und DE 196 37 969C2) wird eine Schraube verwendet, die einen fiachen Schraubenkopf, einen mit Gewinde versehenen Schraubenschaft und eine Schraubenspitze aufweist. Die Schraube wird zunächst mit hoher Drehzahl und einer entsprechenden Anpresskraft auf die zu fügenden Bauteile aufgesetzt. Die hierbei auftretende Reibungswärme plastifiziert den umzuformenden Fügeteilwerkstoff. Hierbei bilden sich sowohl entgegen wie auch in Vorschubrichtung krater- bzw. wulstförmige Ansätze, in denen das Schraubengewinde ein Gegengewinde ausfurcht. Wenn die Schraube die Bauteile durchdrungen und der Schraubenkopf auf dem oberen Bauteil aufgesetzt hat, wird der Einschraubvorgang beendet.

Der vorliegenden Erfindung liegt die Aufgabe zugrunde, ein Verfahren zum Herstellen einer Verbindung zwischen zwei Bauteilen mittels eines mit hoher Geschwindigkeit eingetriebenen Nagels sowie einen Nagel hierfür zu schaffen, welche bei nur einseitiger Zugänglichkeit der Bauteile einsetzbarsind, kein Vorlochen der Bauteile erfordern, einen extrem einfachen und vor allem kurzzeitigen Fügevorgang ohne Drehbewegung des Nagels ermöglichen und dennoch zu einer hohen Verbindungsqualität führen.

Das Verfahren gemäß der Erfindung zum Lösen dieser Aufgabe ist in Patentanspruch 1 definiert.

Bei dem erfindungsgemäßen Verfahren wird ein Nagel verwendet, der einen Nagelkopf mit einer an der Kopfunterseite vorgesehenen Ringnut, einen Nagelschaft und eine Nagelspitze aufweist. Der Nagel wird von einem Setzgerät mit hoherGeschwindigkeit in die im Fügebereich nicht vorgelochten Bauteile im Wesentlichen drehungsfrei axial so eingetrieben, dass die Nägelspitze beide Bauteile vollständig durchdringend über das nagelkopfabgewandte Bauteil hinaus austritt und im nagelkopfseitigen Bauteil ein wulstförmiger Materialaufwurf gebildet wird, der in die Ringnut des Nagelkopfes vorsteht, sowie im nagelkopfabgewandten Bauteil ein kraterförmiger Materialaufwurf gebildet wird, der in nagelkopfabgewandter Richtung vorsteht.

Vorzugsweise entspricht das Volumen der Ringnut im Wesentlichen dem Volumen des Materialaufwurfs des nagelkopfseitigen Bauteils, so dass die Ringnut vollständig von dem Materialaufwurf ausgefüllt wird.

Der Nagelschaft, der zylindrisch oder auch in Richtung auf den Nagelkopf konvergierend oder divergierend ausgebildet sein kann, ist vorzugsweise mit einer Oberflächenprofilierung versehen, die beim Fügevorgang mit verdrängtem Material gefüllt wird.

Die Bauteile können aus Stahl, Aluminium, Magnesium oder Kunststoff mit oder ohne Faseranteil bestehen. Der Nagel wird vorzugsweise aus Stahl, insbesondere vergütetem Stahl hergestellt, kann jedoch auch aus Aluminium, Magnesium, Messing, Keramik oder faserverstärktem Kunststoff hergestellt sein.

Das erfindungsgemäße Verfahren zeichnet sich durch große Einfachheit und extrem geringe Fügezeit aus, da ein Vorlochen der Bauteile nicht erforderlich ist und der Nagel ohne Drehbewegung in einem einzigen Fügevorgang mit hoher Geschwindigkeit in und durch die beiden Bauteile getrieben wird. Wie durch Versuche erhärtet wurde, zeichnet sich die auf diese Weise hergestellte Verbindung zwischen den beiden Bauteilen durch eine hohe Verbindungsqualität aus. Ein weiterer Vorteil des erfindungsgemäßen Verfahrens besteht darin, dass eine zweiseitige Zugänglichkeit des Fügebereiches bei ausreichend steifer Ausführung des nagelkopfabgewandten Bauteils nicht erforderlich ist.

Bei einer anderen Ausführungsform des erfindungsgemäßen Verfahrens wird ein Nagel in Form eines Heftbolzens verwendet, der einen Nagelkopf mit einer an der Kopfunterseite vorgesehenen Ringnut, einen Nagelschaft mit einer Sägezahnprofilierung und eine Nagelspitze aufweist. Der Nagel wird von einem Setzgerät mit hoher Geschwindigkeit in die im Fügebereich nicht vorgelochten Bauteile im Wesentlichen drehungsfrei axial so eingetrieben, dass die Nagelspitze das nagelkopfseitige Bauteil durchdringt und in das nagelkopfabgewandte Bauteil eindringt und dass im nagelkopfseitigen Bauteil ein wulstförmiger Materialaufwurf gebildet wird, der in die Ringnut des Nagelkopfes vorsteht, sowie im nagelkopfabgewandten Bauteil ein kraterförmiger Materialaufwurf gebildet wird, der in nagelkopfabgewandter Richtung vorsteht. Vorzugsweise ist die Sägezahnprofilierung so gerichtet, dass sich jeder Sägezahn zur Nagelspitze hin verjüngt.

Mit dieser Ausführungsform der Erfindung kann ein relativ dünnes Bauteil an einem relativ dickem Bauteil mittels eines Heftbolzens kleinster Abmessungen "angeheftet" werden, um beispielsweise eine zwischen den beiden Bauteilen vorhanden Klebstoffschicht aushärten zu lassen. Hierbei ist eine vollständige oder auch nur teilweise Durchdringung des nagelkopfabgewandten Bauteils möglich.

Weitere vorteilhafte Ausgestaltungen und Weiterbildungen der Erfindung gehen aus den abhängigen Ansprüchen hervor.

Anhand der Zeichnungen werden Ausführungsbeispiele der Erfindung näher erläutert. Es zeigt:
Fig. 1 eine teilweise geschnittene Ansicht einer mit dem erfindungsgemäßen Verfahren hergestellten Verbindung zwischen zwei Bauteilen mittels eines Nagels mit Teilen der Herstellungsvorrichtung;
Fig. 2 einen Längsschnitt durch den Nagel in Fig. 1;
Fig. 3 eine mit III bezeichnete Einzelheit der Fig. 2 in vergrößertem Maßstab;
Figuren 4 bis 8 der Fig. 2 entsprechende Längsschnitte abgewandelter Ausführungsformen des Nagels gemäß der Erfindung;
Fig. 9 eine mit IX bezeichnete Einzelheit der Fig. 8 in vergrößertem Maßstab;
Fig. 10 eine Draufsicht auf den Nagelkopf des Nagels in Fig. 8;
Fig. 11 eine teilweise geschnittene Ansicht einer weiteren Ausführungsform des Nagels;
Fig. 12 eine geschnittene Ansicht einer Verbindung zwischen zwei Bauteilen mittels eines Nagels einer anderen Ausführungsform;
Fig. 13 eine teilweise geschnittene Seitenansicht des Nagels der Verbindung in Fig. 12;
Fig. 14 eine geschnittene Ansicht einer Verbindung zwischen zwei Bauteilen mittels eines Nagels mit Teilen der Herstellungsvorrichtung gemäß einer abgewandelten Ausführungsform;
Fig. 15 eine teilweise geschnittene Seitenansicht des Nagels der Verbindung in Fig. 14.

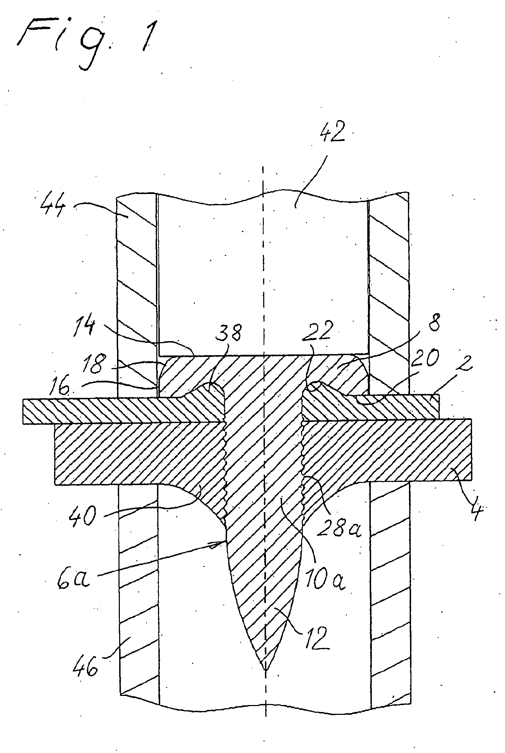

Die Fig. 1 zeigt eine fertige Verbindung zwischen einem Bauteil 2 und einem Bauteil 4 mittels eines Nagels 6a. Im dargestellten Ausführungsbeispiel ist das Bauteil 2 ein dünnwandiges Bauteil in Form eines Bleches, und das Bauteil 4 ist ein Bauteil größerer Wandstärke, das beispielsweise ein Profilbauteil ist. Es kann sich beispielsweise um Karosserieteile für den Fahrzeugbau handeln, wenngleich die Erfindung hierauf nicht beschränkt ist.

Die Bauteile 2, 4 können aus Stahl, Aluminium, Magnesium oder Kunststoff mit und ohne Faseranteil bestehen. Sie sind vor dem Fügevorgang nicht vorgelocht, wie noch genauer erläutert wird.

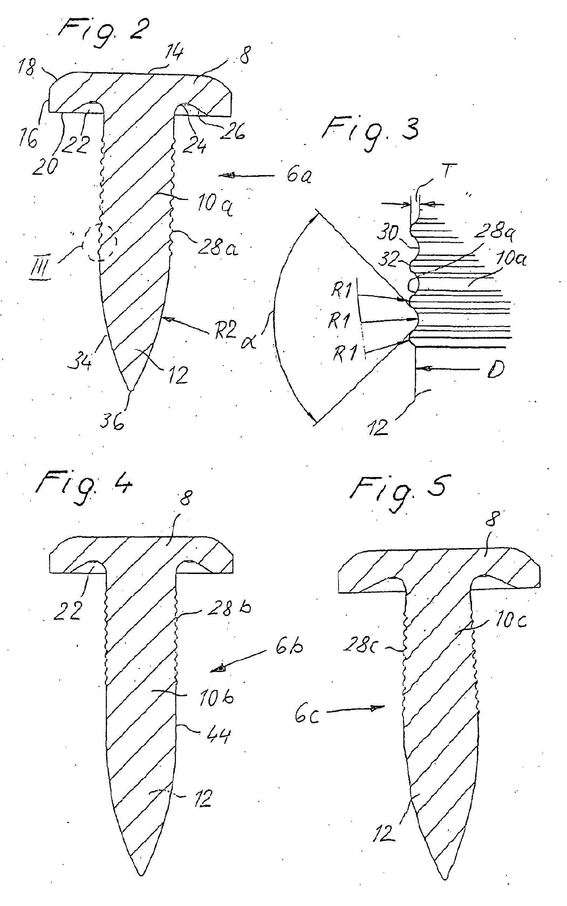

Wie den Figuren 1 und 2 zu entnehmen ist, besteht der Nagel 6a aus einem Nagelkopf 8, einem Nagelschaft 10a und einer Nagelspitze 12.

Der Nagelkopf 8 ist ein Flachkopf mit einer ebenen Oberseite 14, einer zylindrischen Umfangsfläche 16 und einer ebenen Unterseite 20, in der angrenzend am Nagelschaft 10a eine Ringnut22 gebildet ist. Die Ringnut 22 weist eine abgerundete umlaufende Fläche 24 auf, die einerseits tangential in den Nagelschaft 12 und andererseits tangential in eine konische Fläche 26 übergeht.

Der Nagelschaft 10a ist im Ausführungsbeispiel der Figuren 1, 2 im Wesentlichen zylindrisch ausgebildet und in einem bestimmten Bereich seiner Oberfläche mit einer Oberflächenprofilierung 28a versehen. Wie insbesondere aus Fig. 3 hervorgeht, besteht die Oberflächenprofilierung 10a im dargestellten Ausführungsbeispiel aus einer Reihe von ringförmigen Vertiefungen 30 und Erhöhungen 32. Die Oberflächenprofilierung 28a hat somit in Axialschnitten ein abgerundet wellenförmiges Profil, das im dargestellten Ausführungsbeispiel sinusförmig ausgebildet ist. Die in Fig. 3 mit R1 bezeichneten Radien der Vertiefungen 30 und Erhöhungen 32 sind daher identisch. Der Winkel α zwischen den Flanken der Erhöhungen 32 liegt hierbei in der Größenordnung von 90°.

Wie dargestellt, hat die Oberflächenprofilierung 28a nur eine relativ geringe Tiefe. Vorzugsweise ist das Verhältnis der Tiefe T der Oberflächenprofilierung 28a zum mittleren Schaftdurchmesser D kleiner als 0,1 und insbesondere kleiner als 0,05. Beispielsweise liegt dieses Verhältnis in der Größenordnung von 0,03.

Die Nagelspitze 12 hat eine ogivale Oberfläche 34 mit einem abgerundeten Endpunkt 36. Der Ogivalltätsfaktor, d.h. das Verhältnis des Radius R2 zum Schaftdurchmesser D der ogivalen Oberfläche 34, liegt z. B. in der Größenordnung von 2 bis 6, vorzugsweise im Bereich von 3 bis 5 und beträgt insbesondere ungefähr 4.

Der Nagel 6a einschließlich Kopf, Schaft und Spitze ist rotationssymmetrisch ausgebildet, was auch für die Ausführungsbeispiele der Figuren 4 bis 7 und 11 zutrifft.

Der Nagel 6a besteht vorzugsweise aus Stahl. Je nach Anwendung kann erjedoch auch aus Aluminium, Magnesium, Messing, Keramik, oder faserverstärktem Kunststoff bestehen. Im dargestellten Ausführungsbeispiel ist der Nagel 6a unbeschichtet; er kann jedoch auch beschichtet sein.

Wie dargestellt, ist der Nagel 6a einteilig ausgebildet. Grundsätzlich bestehtjedoch auch die Möglichkeit, den Nagelkopf einerseits und den Nagelschaft mit der Nagelspitze andererseits aus zwei Teilen unterschiedlicher Härte herzustellen, die anschließend miteinander verbunden werden. So kann beispielsweise der Nagelschaft mit der Nagelspitze aus Metall und der Nagelkopf aus Aluminium hergestellt werden, die dann mittels Reibschweißen zusammengesetzt werden.

Es wird nun das Verfahren zum Herstellen der in Fig. 1 gezeigten Verbindung zwischen den Bauteilen 2 und 4 mittels des Nagels 6a beschrieben:

Wie bereits erwähnt, sind die Bauteile 2 und 4 vor dem Fügevorgang nicht vorgelocht. Wenn die beiden Bauteile 2 und 4 aneinander anliegen, wird der Nagel 6a von einem Setzgerät mit hoher Geschwindigkeit von oben in die beiden Bauteile 2 und 4 eingetrieben. Die Setzgeschwindigkeit hängt vom Anwendungsfall ab und liegt z.B. zwischen 5 und 300 m/s, vorzugsweise 10 und 100 m/s.

Das Bolzensetzgerät ist beispielsweise ein Bolzenschussgerät, eine pulverkraftbetriebene Kartusche oder dergleichen. In Fig. 1 ist ein Kolben 42 eines derartigen Setzgerätes angedeutet. Ferner ist das Mundstück 44 eines im Übrigen nicht dargestellten Niederhalters zu sehen.

Wie bereits erwähnt, ist das erfindungsgemäße Verfahren bei nur einseitiger Zugänglichkeit der Fügestelle durchführbar. Wenn jedoch das Bauteil 4 keine ausreichende Steifigkeit hat, sollte ein Gegenhalter in Form einer Hülse 46 vorgesehen werden, an der die Bauteile 2, 4 abgestützt werden.

Beim Fügevorgang dringt zunächst die Nagelspitze 12 in das Bauteil 2 ein. Hierbei kommt es an der Oberseite des Bauteils 2 zu einem Materialaufwurf 38, der beim Eindringen der Nagelspitze 12 in das Bauteil 2 anwächst.

Die Nagelspitze 12 durchdringt dann das untere Bauteil 4. Dies führt einerseits zu einem kraterförmigen Materialaufwurf 40, der beim Durchdringen der Nagelspitze 12 in Eintreibrichtung größer wird. Andererseits fließt Material in die Oberflächenprofilierung 28a, wodurch die Vertiefungen der Oberflächenprofilierung 28a vollständig mit Material 4 ausgefüllt werden. Vorzugsweise handelt es sich hierbei um Material des Bauteils 4. Unter Umständen lässt sich jedoch nicht vermeiden, dass sich die Vertiefungen der Oberflächenprofilierung 28a zumindest teilweise mit Material des Bauteils 2 füllen.

Der Fügevorgang ist beendet, wenn der Nagelkopf 8 mit seiner Unterseite an der Oberseite des Bauteils 2 aufliegt. Der Nagelkopf 8 ist so ausgebildet, dass er eine gewisse Flexibilität hat, um Spaltbildung unter dem Nagelkopf zu vermeiden und leichte Schiefstellungen des Nagels ausgleichen zu können. Wenn sich der Setzstempel 42 vom Nagelkopf 8 löst, federt der Nagel 6a geringfügig zurück. Hierdurch werden die Bauteile 2, 4 miteinanderverspannt, was der Verbindungsqualität zugute kommt.

Das Volumen der Ringnut 22 entspricht im Wesentlichen dem Volumen des Materialaufwurfs 38, so dass die Ringnut 38 vollständig mit dem Werkstoff des Bauteils 2 ausgefüllt wird. Bei Rohbauanwendungen, bei dem das Bauteil 2 mit einer Beschichtung (Lack oder kathodische Tauchlackierung) versehen ist, kann es daher zu keiner Blasenbildung durch eingeschlossene Luft kommen.

Wie dargestellt, ist die Oberflächenprofilierung 28a nur in demjenigen Bereich des Nagelschaftes 10a, vorgesehen, der sich bei der fertigen Verbindung innerhalb des Werkstoffes des Bauteils 4 befindet. Auf diese Weise entsteht eine Verbindung hoher Auszugsfestigkeit, da die Bauteile 2, 4 einerseits durch Kraft- und Formschluss zwischen Nagelschaft 10a und Bauteil 4 und andererseits durch Formschluss zwischen Nagelkopf 8 und Bauteil 2 miteinander verspannt werden. Wie dargestellt, bleiben die Bauteile 2 und 4 in der Trennebene im Wesentlichen unverformt, so dass die Ebenheit der Anlageflächen der Bauteile 2 und 4 erhalten bleibt. Wie ferner in Fig. 1 zu sehen ist, ragt die Nagelspitze 12 im Wesentlichen vollständig aus dem Bauteil 4 vor.

Wie ohne weiteres ersichtlich, ist für den Fügevorgang eine Zugänglichkeit nur von der Oberseite her erforderlich. Der Fügevorgang ist extrem einfach, da weder ein Vorlochen der Bauteile 2, 4 noch eine Drehbewegung des Nagels 6a erforderlich ist. Die Fügezeit ist äußerst gering. Außerdem sind nur vergleichsweise geringe Fügekräfte erforderlich. Dennoch ergibt sich eine hohe Verbindungsqualität mit entsprechend hoher Auszugsfestigkeit.

Wie sich ferner gezeigt hat, führt die abgerundete Form der Oberflächenprofilierung 28a zu vergleichsweise geringen Spannungen in der Verbindung zwischen den Bauteilen 2, 4 und dem Nagel 6a, was zu der Verbindungsqualität entsprechend beiträgt.

Wie in Fig. 1 zu sehen ist, erstreckt sich die Oberfläche des Nagelkopfes 8 bis nahezu zum äußeren Rand (Umfangsfläche 16) des Nagelkopfes 8. Zwischen der eben ausgebildeten Oberseite 14 und der Umfangsfläche 16 ist nur eine relativ kleine Rundung oder Fase 18 vorgesehen, so dass der Kolben 42 am Nagelkopf 8 im Wesentlichen über dessen gesamte Breite angreift.

Wenn die Bolzenspitze 12 in die Bauteile 2, 4 eindringt, wird der größte Teil der Setzkraft vom Kolben 42 auf den zentralen Bereich des Nagelkopfes 8 übertragen, so dass im zentralen Bereich des Nagelkopfes 8 entsprechend hohe Spannungen entstehen. Wenn am Ende des Setzvorgangs der Nagelkopf 8 auf der Oberseite des Bauteils 2 aufsetzt, wird der größte Teil der Setzkraft vom Kolben 42 auf den radial äußeren Bereich des Nagelkopfes 8 und von da über die Außenfläche der Unterseite 20 auf die Bauteile 2, 4 übertragen, während der zentrale Bereich des Nagelkopfes 8 druckentlastet wird.

Somit werden die vom Kolben 42 ausgeübten Setzkräfte nicht in den Nagelschaft 10a eingeleitet. Auf diese Weise wird vermieden, dass es zu einem "Durchschlag" beim Aufsetzen des Nagels 6a auf dem Bauteil 2 kommt, selbst wenn der Setzvorgang mit Energieüberschuss betrieben wurde. Bei einem so genannten "Durchschlag" dringt der Nagelkopf 8 in das Bauteil 2 ein, und außerdem entsteht ein Spalt zwischen der Oberflächenprofilierung 28a des Nagelschaftes 10a und dem Loch des Bauteils 4.

Der Niederhalter 44 dient in erster Linie dazu, die Bauteile 2 und 4 vor und während des Setzvorganges in Anlage gegeneinander zu drücken. Hierzu reichen im Allgemeinen Niederhalterkräfte kleiner 3 kN aus. Höhere Niederhalterkräfte zum Beeinflussen der Materialeigenschaften der Bauteile 2 und 4 sind im Allgemeinen nicht erforderlich.

Der Gegenhalter in Form der Hülse 46 ist, wie bereits erwähnt, nur dann erforderlich, wenn die Steifigkeit des Bauteils 4 nicht ausreichend ist.

Anhand der Figuren 2 bis 10 werden nun verschiedeneAusführungsformen des Nagels beschrieben, die bei dem Verfahren gemäß der Erfindung verwendet werden können.

Der Nagel 6b der Fig. 4 unterscheidet sich von dem Nagel6a der Fig. 2 lediglich dadurch, dass zwischen der Nagelspitze 12 und dem mit der Oberflächenprofilierung 28b versehenen Teil des Nagelschaftes 10b ein zylindrischer Abschnitt 48 vorgesehen ist, wodurch der Nagelschaft 10b eine entsprechend größere Länge erhält. Der längere Nagelschaft 10b begünstigt die Entspannungsphase nach dem Eindringen der Nagelspitze in die Bauteile, wodurch Verformungen der Bauteile reduziert werden.

Der Nagel 6c der Fig. 5 unterscheidet sich von dem Nagel 6a der Fig. 2 lediglich dadurch, dass der Nageischaft 10a eine im Wesentlichen konische Form hat, die von der Nagelspitze 12 aus in Richtung auf den Nagelkopf 8 konvergiert. Die Oberflächenprofilierung 28c ist hierbei an die konische Form des Nagelschaftes 10c so angepasst, dass ihre Tiefe im Wesentlichen konstant bleibt. Durch diese "Taillierung" des Nagelschaftes 10c lässt sich eine höhere Auszugsfestigkeit der Verbindung erreichen.

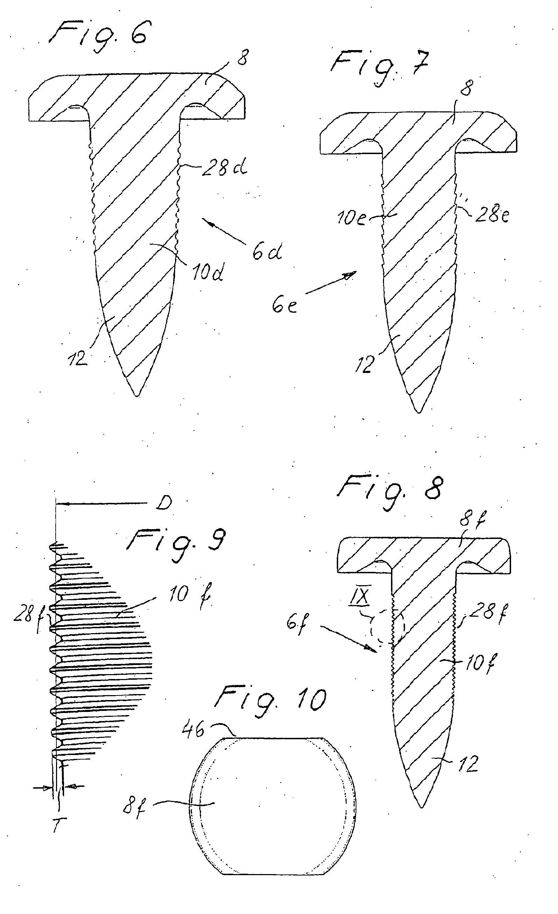

Bei dem Nagel 6d der Fig. 6 ist der Nagelschaft 10d mit der Oberflächen profilierung 28d ebenfalls im Wesentlichen konisch ausgebildet, jedoch so, dass er von der Nagelspitze 12 in Richtung auf den Nagelkopf 8 divergierend verläuft. Hierdurch wird eine spannungsgünstige Anordnung und ein besseres Hinterfliesen der Oberflächenprofilierung 28d erreicht.

Der Nagel 6e der Fig. 7 hat einen im Wesentlichen zylindrischen Nagelschaft 10e mit einer Oberflächenprofilierung 28e, die in Längsschnitten sägezahnformig ausgebildet ist. Hierdurch lässt sich eine höhere Auszugsfestigkeit erzielen, die allerdings durch höhere Spannungen in der Verbindung erkauft werden muss.

Der Nagel 6f der Figuren 8 bis 10 ist mit einer Oberflächenprofilierung 28f in Form eines Gewindes versehen. Das Gewinde, das in Fig. 9 vergrößert dargestellt ist, ist als Feinstgewinde ausgebildet, dessen Steigung vorzugsweise kleiner als 3,5 ist und z.B. in der Größenordnung von 0,25 liegt.

Die übrigen Fügeparameter in Verbindung mit der Ausbildung der Oberflächenprofilierung 28f werden so gewählt, dass der Nagel 6f beim Fügevorgang durch die beiden Bauteile 2, 4 getrieben wird, ohne dass der Nagel 6f eine merkliche Drehbewegung ausführt. Wie bei den vorstehend beschriebenen Ausführungsbeispielen füllen sich hierbei die Gewindegänge der Oberflächenprofilierung 28f mit plastifiziertem Material. Hierbei wird zu den Bauteilen 2, 4 ein Gegengewinde gebildet. Der Nagel 6f kann daher nach dem Setzvorgang wieder aus den beiden Bauteilen 2, 4 gelöst werden. Zu diesem Zweck ist der Nagelkopf 8f mit einem Antriebsmerkmal 46 versehen, so dass der Nagel 6f mit Hilfe eines Werkzeuges (nicht gezeigt) aus den Bauteilen herausgeschraubt werden kann.

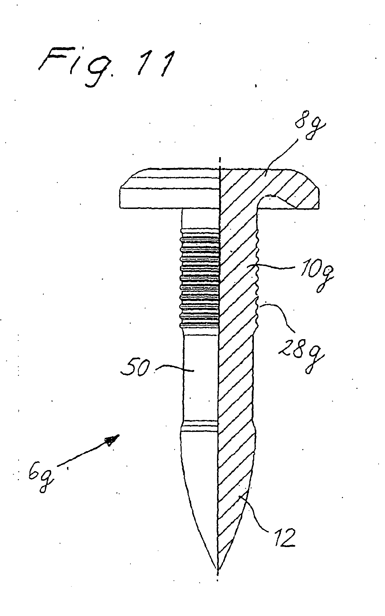

Der Nagel 6g der Fig. 11 entspricht im Wesentlichen dem Nagel 6b der Fig. 4, d.h. er besitzt einen Nagelkopf 8g, einen Nagelschaft 10g mit einer Oberflächenprofilierung 28g, eine Nagelspitze 12 sowie einen nicht profilierten Abschnitt 50, der zwischen der Nagelspitze 12 und dem mit der Oberflächenprofilierung 28g versehenen Teil des Nagelschaftes 10g angeordnet ist. Im Gegensatz zu dem Ausführungsbeispiel der Fig. 4 hat jedoch der profilfreie Abschnitt 50 eine verjüngte Form, d.h. sein Durchmesser ist kleiner als der maximale Durchmesser der Nagelspitze 12 und als der Durchmesser des mit der Oberflächenprofilierung 28g versehenen Teils des Nagelschaftes. Im dargestellten Ausführungsbeispiel ist der durchmesserverringerte Abschnitt 50 zylindrisch ausgebildet; grundsätzlich könnte er jedoch auch eine andere geometrische Form haben.

Aufgrund der Durchmesserverringerung des Abschnittes 50 entsteht beim Eindringen des Nagels 8g in die Bauteile 2, 4 eine Druckentlastung, sobald die Nagelspitze 12 vollständig in das Material der Bauteile eingedrungen ist. Diese Druckentlastung begünstigt eine geringere Verformung der Bauteile 2, 4 und dadurch höhere Verbindungsfertigkeiten.

Das beschriebene Verfahren zum Setzen der Nägel lässt sich besonders vorteilhaft in Verbindung mit einem Kleben der Bauteile 2, 4 einsetzen. Bei dieser Hybrid-Fügetechnik werden die Bauteile 2, 4 an ihren aneinander anliegenden Flächen durch einen Kleber zusätzlich miteinander verbunden, wodurch eine extrem hochfeste und gleichförmige Verbindung zwischen den Bauteilen 2, 4 entsteht. Hierbei können beliebige herkörnmliche Kleber verwendet werden, wie sie im Stand der Technik in großer Vielfalt bekannt sind.

Ein wichtiger Vorteil des beschriebenen Verfahrens besteht darin, dass eine nur sehr geringe Setzdauer zum Setzen eines Nagels erforderlich ist. Ferner kann das Verfahren, wie bereits ausführlich erläutert, ohne Vorlochen und bei nur einseitiger Zugänglichkeit der Bauteile durchgeführt werden. Diesevorteilhaften Eigenschaften machen das beschriebene Verfahren besonders geeignet für ein "kontinuierliches Nageln", wie im Folgenden erläutert wird:

Häufig müssen zwei Bauteile an mehreren zueinander beabstandeten Fügestellen, beispielsweise entlang von Fügeflanschen, miteinander verbunden werden. Bei herkömmlichen mechanischen Fügeverfahren wird dann das Setzgerät von einem Roboter nacheinander zu den Fügestellen bewegt. An jeder Fügestelle wird das Setzgerät zunächst abgebremst, der Fügevorgang durchgeführt und das Setzgerät wieder beschleunigt. Dies führt naturgemäß zu vergleichsweise langen Taktzeiten. So erfordern die Fügetechniken Stanznieten, Clinchen, Blindnieten und das Nageln mittels dem eingangs beschriebenen FDS-Verfahren Taktzeiten von 2-7s, 2-6,5s, 3-7,5s bzw. 3-8s.

Im Gegensatz zu dem beschriebenen diskontinuierlichen Fügen der Bauteile an den Fügestellen erlaubt das erfindungsgemäße Verfahren ein "kontinuierliches Fügen". Genauer gesagt, erfolgt die vom Roboter erzeugte Bewegung des Setzgerätes von Fügestelle zu Fügestelle kontinuierlich, wobei während dieser Zustellbewegung die Nägel nach dem oben beschriebenen Verfahren gesetzt werden. Die Bauteile werden zweckmäßigerweise beim kontinuierlichen Ablauf dieser Fügevorgänge von entsprechenden Spannvorrichtungen in der richtigen Position zueinander gehalten. Voraussetzung ist lediglich, dass die Fügestellen für das Setzgerät zugänglich sind. Dies ist häufig der Fall, wenn sich die Fügestellen an Fügeflanschen befinden.

Das kontinuierliche Nageln wird dadurch erleichtert, dass zum Setzen der Nägel nach dem beschriebenen Verfahren eine präzise Ansteuerung der Fügestellen im allgemeinen nicht erforderlich ist. Die vom Roboter durchgeführte Zustellbewegung des Setzgerätes kann berührungslos erfolgen. Statt dessen kann jedoch ein am Setzgerät vorgesehenes Mundstück (Niederhalter 44 in Fig. 1) am oberen Bauteil 2 anliegen.

In jedem Fall ergibt sich eine beträchtliche Reduzierung der Taktzeiten, da keine Brems- und Beschleunigungsvorgänge des Roboters erforderlich sind und zudem kürzere Setzzeiten als bei herkömmlichen mechanischen Fügeverfahren erzieltwerden. So sind mit dem beschriebenen Verfahren Taktzeiten in der Größenordnung von 1,5-3s möglich, was eine Taktzeitreduzierung von ca. 50% ausmacht.

Wie bereits im Zusammenhang mit Fig. 1 erläutert, ist es zweckmäßig, die zu verbindenden Bauteile 2, 4 während des Bolzensetzens mittels eines Niederhalters zusammenzudrücken, wobei Niederhalterkräfte in einer Größenordnung bis zu 20 kN denkbar sind. Der Niederhalter bildet üblicherweise Teil des Setzgerätes. Ein kontinuierliches Nageln, wie es vorstehend beschrieben wurde, ist dann bei Verwendung eines Niederhalters nicht möglich. Statt eines Niederhalters kann jedoch auch ein stationärer Spannmechanismus (nicht gezeigt) vorgesehen werden, der unabhängig von dem Setzgerät und an Stellen außerhalb der Fügebereiche die beiden Bauteile mit einer entsprechenden Kraft gegeneinander drückt. In diesem Fall ist dann ein kontinuierliches Nageln möglich, bei dem das Setzgerät berührungsfrei verfahren wird, wobei nur ein Treibdom des Setzgerätes über den Nagel Kontakt zu den zu verbindenden Bauteilen hat und das Mundstück des Setzgerätes somit gewissermaßen "schwebend" über das nagelkopfseitige Bauteil bewegt wird.

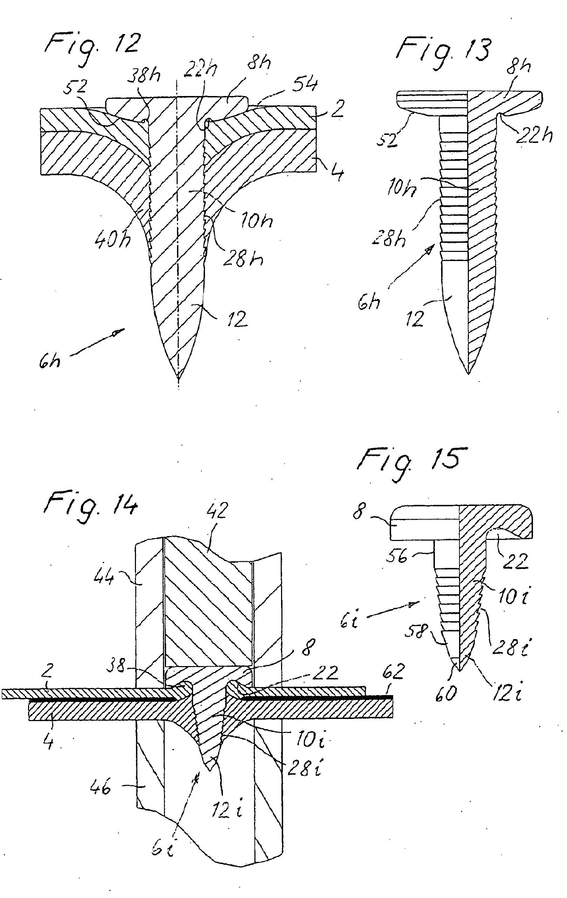

Die Figuren 12 und 13 zeigen eine weitere Ausführungsform eines Nagels 6h. Der Schaft 10h mit seinem Sägezahnprofil 28 h und die Nagelspitze 12 des Nagels 6h entsprechen im Wesentlichen dem in Fig. 7 gezeigten Nagel. Wie in Fig. 7 ist auch hier das Sägezahnprofil 22h so gerichtet, dass sich jeder Zahn in Richtung auf die Nagelspitze 12 hin verjüngt. Unterschiedlich ist dagegen, dass der Nagelkopf 8h als Senkkopf ausgebildet ist.

Der Nagelkopf 8h des Nagels 6h hat an seiner Unterseite einen schräg verlaufenden Abschnitt 52, der in eine Ringnut 22h übergeht. Die Ringnut 22h, die zwischen dem schräg verlaufenden Abschnitt 52 und einem zylindrischen Abschnitt des Schaftes 10h liegt, hat sehr kleine Abmessungen im Vergleich zu dem schräg verlaufenden Abschnitt 52. Der schräg verlaufende Abschnitt 52 ist vorzugsweise geringfügig gewölbt, um für eine gleichmäßige Kraftverteilung zwischen dem Nagelkopf 8h und der Oberseite des Bauteils 2 zu sorgen. Im Übrigen hat der als Senkkopf ausgebildete Nagelkopf 8h eine deutlich geringere Dicke als die Nagelköpfe dervorhergehenden Ausführungsbeispiele.

Aufgrund der beschriebenen Geometrie dringt der Senkkopf des Nagels 6h zumindest teilweise in die Oberseite des Bauteils 2 ein. Genauer gesagt, verformt der Nagelkopf 8h das obere Bauteil 2 so, dass eine trichterartige Mulde 54 gebildet wird, die den Nagelkopf 8h weitgehend aufnimmt. Außerdem werden die Bauteile 2, 4 im Fügebereich, d.h. unterhalb des Senkkopfes nach unten verformt, so dass auch im Anlagebereich zwischen den beiden Bauteilen 2, 4 ein trichterförmiger Verlauf zu beobachten ist.

Insbesondere wenn das nagelkopfseitige Bauteil 2 aus Stahl besteht, kommt es an dessen Oberseite zu einem vergleichsweise geringfügigen Materialaufwurf 38h, der die Ringnut 22h nur teilweise ausfülft. An dieser Stelle sei darauf hingewiesen, dass auch bei den vorhergehenden Ausführungsbeispielen die Verbindung so gestaltet werden kann, dass der Materialaufwurf 38 entgegen der Darstellung in Fig. 1 die Ringnut 22 nur teilweise ausfüllt.

Die Figuren 14, 15 zeigen eine Ausführungsform der Erfindung, bei der der Nagel 6i als "Heftbolzen" ausgebildet ist. Er dient dazu, ein relativ dünnes Bauteil 2 an einem dickeren Bauteil 4 "anzuheften". Diese Ausführungsform wird insbesondere im Zusammenhang mit einer Klebstoffverbindung der Bauteile 2, 4 verwendet, zwischen denen eine Klebstoffschicht 62 vorgesehen wird. Hierbei wird das Bauteil 2 durch einen oder mehrere Heftbolzen an dem Bauteil 4 angeheftet, damit die Klebstoffschicht 62 aushärten kann.

Der als Heftbolzen ausgebildete Nagel 6i hat einen Nagelkopf 8 mit einer Ringnut 22 entsprechend den Ausführungsbeispielen der Figuren 1 bis 8. Der Schaft 10i des Nagels 6i ist so ausgebildet, dass sich an den Nagelkopf 8 ein zylindrischer Abschnitt 56 anschließt, der in einen sich konisch verjüngenden Schaftabschnitt mit einer Sägezahnprofilierung 28i übergeht. Die Sägezahnprofilierung 28i ist so gerichtet, dass sich jeder Zahn in Richtung auf die Nagelspitze 12i verjüngt, so dass an der dem Nagelkopf 8 zugewandten Seite jedes Zahnes eine radial verlaufende Schulterfläche gebildet wird. Die sich an die Sägezahnprofilierung 28i anschließende Nagelspitze 12i setzt sich aus einem kegelstumpfförmigen Abschnitt 58 und einem kegelspitzenförmigen Abschnitt 60 zusammen, wobei der Kegelwinkel des Abschnittes 58 geringer als der Kegelwinkel des Abschnittes 60 ist.

Wenngleich bei dem dargestellten Ausführungsbeispiel die Nagelspitze 12i sich aus den beiden Abschnitten 58, 60 unterschiedlichen Kegelwinkels zusammensetzt, kann die Nagelspitze auch auf andere Weise, beispielsweise als ogivale Nagelspitze entsprechend den vorhergehenden Ausführungsbeispielen ausgebildet werden. Wichtig ist die Konizität der Nagelspitze und des Nagelschaftes im Bereich der Sägezahnprofilierung 28i.

In Fig. 14 sind wiederum, ähnlich wie in Fig. 1, ein Niederhalter 44 und ein Gegenhalter in Form einer Hülse 46 angedeutet.

Der als Heftbolzen ausgebildete Nagel 6i hat deutlich kleinere Abmessungen als die vorhergehenden Ausführungsformen der Erfindung. So hat der Heftbolzen beispielsweise eine Länge in der Größenordnung von 6 mm. Aufgrund der geschilderten Ausbildung des Nagelschaftes 10i und der Nagelspitze 12i hat eine gedachte Umhüllende der Sägezahnprofilierung 28i in Verbindung mit dem Umriss der Nagelspitze 12i eine Form, die in Axialschnitten ungefähr an die Form einer Parabel angenähert ist.

Die Geometrie des Nagelschaftes 10i und der Nagelspitze 12i und insbesondere die Ausrichtung der Oberflächenprofilierung 28i stellen sicher, dass der Nagel 6i von dem Kolben 42 (Treibdom) des im Übrigen nicht dargestellten Setzgerätes mit vergleichsweise geringer Eintreibkraft in die Bauteile 2, 4 eingetrieben werden kann, während der Auszugswiderstand entgegen der Eintreibrichtung aufgrund der schulterförmigen Flächenzwischen den Zähnen der Sägezahnprofilierung 28i vergleichsweise hoch ist. Ein wesentlicher Vorteil des als Heftbolzens ausgebildeten Nagels 6i besteht darin, dass er bei dem "Heftvorgang" die Klebstoffschicht 62 praktisch nicht beeinflusst. Wie sich bei Versuchen gezeigt hat, ist die Dicke der Klebstoffschicht 62 vor und nach dem Heftvorgang gleich.

Bei der in Fig. 14 dargestellten Verbindung steht der Nagelkopf 12i weitgehend über den kraterförmigen Materialaufwurf 40 des Bauteils 4 vor. Vorzugsweise werden jedoch der Nagel 6i und die Bauteile 2, 4 so dimensioniert, dass das freie Ende der Nagelspitze 12i nur geringfügig oder überhaupt nicht aus dem Bauteil 4 vorsteht. Denkbar ist auch eine Lösung, bei der das freie Ende der Nagelspitze 12i gerade mit dem unteren Ende des Materialaufwurfes 40 abschließt.

Wie bereits erwähnt, besteht ein wesentlicher Vorteil des erfindungsgemäßen Verfahrens darin, dass der Nagel mit einem einzigen Schlag des Bolzensetzgerätes in die beiden Bauteile 2, 4 eingetrieben werden kann, so dass der Nagelkopt am nagelkopfseitigen Bauteil aufliegt. Dies gilt für alle dargestellten Ausführungsformen. Grundsätzlich ist es jedoch auch möglich, den Setzvorgang so durchzuführen, dass der Nagel durch einen vom Setzgerät ausgeübten Schlag nicht ganz bis zur Kopfanlage in die Bauteile eingetrieben wird, sondern nur beispielsweise 80 bis 90 % des maximal möglichen Eindringweges. Das weitere Eintreiben des Nagels bis zur Kopfanlage kann dann miteinem odermehreren weiteren Schlägen erfolgen. Diese weiteren Schläge können entweder manuell mittels eines Hammers, beispielsweise übereinen Treibdorn, oder auch maschinell durchgeführt werden. Wie durch Versuche festgestellt wurde, hat dieses "mehrstufige" Bolzensetzen keinen negativen Einfluss auf die Festigkeit der Verbindung, was sowohl für Bauteile aus Aluminium wie auch für Bauteile aus Stahl gilt.

## Patentansprüche

1. Verfahren zum Herstellen einer Verbindung zwischen zwei Bauteilen (2, 4) in einem Fügebereich mittels eines Nagels (6a-i), der einen Nagelkopf (8; 8f; 8g; 8h) mit einer an der Kopfunterseite vorgesehenen Ringnut (22; 22h), einen Nagelschaft (10a-i) und eine Nagelspitze (12; 12i) aufweist, bei welchem Verfahren der Nagel von einem Setzgerät mit hoher Geschwindigkeit in die Bauteile im Wesentlichen drehungsfrei axial so eingetrieben wird, dass die Nagelspitze das nagelkopfseitige Bauteil (2) durchdringt und in das im Fügebereich nicht vorgelochte nagelkopfabgewandte Bauteil (4) eindringt und hierbei im nagelkopfseitigen Bauteil (2) eine Materialverformung entsteht, die in die Ringnut des Nagelkopfes vorsteht,
**dadurch gekennzeichnet,**
**dass** der Eintreibvorgang in der Weise erfolgt, dass in dem im Fügebereich nicht vorgelochten nagelkopfseitigen Bauteil (2) ein wulstförmiger Materialaufwurf (38, 38h) entsteht, der die in die Ringnut des Nagelkopfes vorstehende Materialverformung bildet, und
die Nagelspitze beide Bauteile vollständig durchdringend über das nagelkopfabgewandte Bauteil (4) hinaus austritt und im nagelkopfabgewandten Bauteil (4) ein kraterförmiger Materialaufwurf (40) entsteht, der in nagelkopfabgewandter Richtung vorsteht.

2. Verfahren nach Anspruch 1, **dadurch gekennzeichnet, dass** das Volumen der Ringnut (22) im Wesentlichen dem Volumen des Materialaufwurfs (38) des nagelkopfseitigen Bauteils (2) entspricht.

3. Verfahren nach Anspruch 1 oder 2, **dadurch gekennzeichnet, dass** die Ringnut (22) angrenzend am Nagelschaft (10a-f) eine abgerundete Fläche (24) hat, die in eine konusförmige Fläche (26) übergeht.

4. Verfahren nach einem der vorhergehenden Ansprüche, **dadurch gekennzeichnet, dass** der Nagelschaft (10a, b, e, f) im Wesentlichen zylindrisch ausgebildet ist.

5. Verfahren nach einem der Ansprüche 1 bis 3, **dadurch gekennzeichnet, dass** der Nagelschaft (10c) in Richtung auf den Nagelkopf (8) konvergierend ausgebildet ist.

6. Verfahren nach einem der Ansprüche 1 bis 3, **dadurch gekennzeichnet, dass** der Nagelschaft (10d) in Richtung auf den Nagelkopf (8) divergierend ausgebildet ist.

7. Verfahren nach einem der vorhergehenden Ansprüche, **dadurch gekennzeichnet, dass** der Nagelschaft (10a-f) mit einer Oberflächenprofilierung (28a-f) versehen ist, die sich beim Herstellen der Verbindung mit verdrängtem Material füllt.

8. Verfahren nach Anspruch 7, **dadurch gekennzeichnet, dass** die Oberflächenprofilierung (28a-f) nur in einem Bereich des Nagelschaftes (10a-f) angeordnet ist, derin derfertigen Verbindung innerhalb des nagelkopfabgewandten Bauteils (4) liegt.

9. Verfahren nach Anspruch 7 oder 8, **dadurch gekennzeichnet, dass** das Verhältnis der maximalen Tiefe (T) der Oberflächenprofilierung (28a-f) zu dem mittleren Durchmesser (D) des Nagelschaftes (10a-f) kleiner als 0,1, vorzugsweise kleiner als 0,05 und insbesondere kleiner als 0,03 ist.

10. Verfahren nach einem der Ansprüche 7 bis 9, **dadurch gekennzeichnet, dass** die Oberflächenprofilierung (28a-d) in Axialschnitten aus einem abgerundet wellenförmigen Profil besteht.

11. Verfahren nach einem der Ansprüche 7 bis 9, **dadurch gekennzeichnet, dass** die Oberflächenprofilierung (28e) in Axialschnitten aus einem Sägezahnprofil besteht.

12. Verfahren nach Anspruchs 11, **dadurch gekennzeichnet, dass** das Sägezahnprofil so gerichtet ist, dass sich jeder Sägezahn zur Nagelspitze hin verjüngt.

13. Verfahren nach Anspruch 11 oder 12, **dadurch gekennzeichnet, dass** die Umhüllende des Sägezahnprofils und der Umriss der Nagelspitze zusammen in Axialschnitten einen ungefähr parabelförmigen Verlauf haben.

14. Verfahren nach einem der Ansprüche 7 bis 13, **dadurch gekennzeichnet, dass** die Oberflächenprofilierung (28a-e) von einer Reihe kreisförmiger Vertiefungen (30) und Erhöhungen (32) gebildet wird.

15. Verfahren nach einem der Ansprüche 7 bis 13, **dadurch gekennzeichnet, dass** die Oberflächenprofilierung (28) von einem Gewinde gebildet wird, das beim axialen Eintreiben des Nagels in die beiden Bauteile (2, 4) ein entsprechendes Gegengewinde bildet.

16. Verfahren nach Anspruch 15, **dadurch gekennzeichnet, dass** die Steigung des von der Oberflächenprofilierung (28f) gebildeten Gewindes kleiner als 0,35 ist und vorzugsweise in der Größenordnung von 0,25 liegt.

17. Verfahren nach Anspruch 15 oder 16, **dadurch gekennzeichnet, dass** der Nagelkopf (8f) ein Antriebsmerkmal (46) für das Angreifen eines Werkzeuges hat, um den Nagel (6f) aus den beiden Bauteilen (2, 4) wieder lösen zu können.

18. Verfahren nach einem der vorhergehenden Ansprüche, **dadurch gekennzeichnet, dass** zwischen einem mit einer Oberflächenprofilierung (28d; 28g) versehenen Teil des Nagelschaftes (10d; 10g) und der Nagelspitze (12) ein profiltreier Abschnitt (48; 50) vorgesehen ist.

19. Verfahren nach Anspruch 18, **dadurch gekennzeichnet, dass** zwischen einem mit einer Oberflächenprofilierung (28g) versehenen Teil des Nagelschaftes (10g) und der Nagelspitze (12) ein durchmesserverringerter Abschnitt (50) vorgesehen ist.

20. Verfahren nach einem der vorhergehenden Ansprüche, **dadurch gekennzeichnet, dass** die Oberseite (14) des Nagelkopfes (8) im Wesentlichen bis zu dessen äußerem Rand eben ist, um in der Endlage des Nagels die auf den Nagelkopf (8) wirkenden Setzkräfte weitgehend auf das nagelkopfseitige Bauteil (2) zu übertragen und **dadurch** einen Durchschlag des Nagels durch die beiden Bauteile zu vermeiden.

21. Verfahren nach einem der vorhergehenden Ansprüche, **dadurch gekennzeichnet, dass** die Nagelspitze (12) eine ogivale Form mit einem Ogivalitätsfaktor von 3 bis 5, insbesondere 4 hat.

22. Verfahren nach einem der Ansprüche 1 bis 21, **dadurch gekennzeichnet, dass** der Nagel (6a-f) einteilig aus Stahl oder Aluminium oder Magnesium oder Messing oder Keramik oder einem faserverstärktem Kunststoff hergestellt ist.

23. Verfahren nach einem der Ansprüche 1 bis 21, **dadurch gekennzeichnet, dass** der Schaft und Kopf des Nagels aus unterschiedlich harten Werkstoffen hergestellt und anschließend miteinander verbunden werden.

24. Verfahren nach einem dervorhergehenden Ansprüche, **dadurch gekennzeichnet, dass** das nagelkopfseitige Bauteil (2) ein relativ dünnes Blech und das nagelkopfabgewandte Bauteil (4) ein Profilbauteil größerer Dicke ist.

25. Verfahren nach einem der vorhergehenden Ansprüche, **dadurch gekennzeichnet, dass** die Bauteile (2, 4) aus Stahl und/oder Aluminium und/oder Magnesium und/oder Kunststoff bestehen.

26. Verfahren nach einem der vorhergehenden Ansprüche, **dadurch gekennzeichnet, dass** die beiden Bauteile (2, 4) zusätzlich durch Kleben miteinander verbunden werden.

27. Verfahren zum Herstellen mehrerer Verbindungen zwischen zwei Bauteilen an zueinander beabstandeten Fügestellen, bei dem ein Setzgerät zum Setzen von Nägeln von einem Roboter nacheinander zu den Fügestellen bewegt wird, **dadurch gekennzeichnet, dass** die vom Roboter hervorgerufene Bewegung des Setzgeräts zu den Fügestellen kontinuierlich erfolgt und bei dieser kontinuierlichen Bewegung die Nägel mit dem Verfahren nach einem der vorhergehenden Ansprüche in die beiden Bauteile eingetrieben werden.

28. Verfahren nach einem der vorhergehenden Ansprüche, **dadurch gekennzeichnet, dass** der Nagelkopf (8h) als Senkkopf ausgebildet ist, dessen Unterseite einen schräg verlaufenden Abschnitt (52) und eine gegenüber diesem kleine Ringnut (22h) aufweist, so dass der Senkkopf zumindest teilweise in das Material des nagelkopfseitigen Bauteils (2) eindringt.

29. Verfahren nach einem der vorhergehenden Ansprüche, **dadurch gekennzeichnet, dass** die Bauteile (2, 4) während des Setzvorganges durch einen am Setzgerät vorgesehenen Niederhalter (44) oder einen vom Setzgerät unabhängigen Spannmechanismus gegeneinander gedrückt werden.

30. Verfahren nach einem der Ansprüche 1 bis 29, **dadurch gekennzeichnet, dass** der Nagel (6, 6a-i) mit einem einzigen Schlag des Setzgerätes in die beiden Bauteile (2, 4) eingetrieben wird.

31. Verfahren nach einem der Ansprüche 1 bis 29, **dadurch gekennzeichnet, dass** der Nagel (6, 6a-i) mit einem Schlag des Setzgerätes weitgehend in die beiden Bauteile (2, 4) eingetrieben wird und mit einem oder mehreren weiteren Schlägen, die manuell oder maschinell ausgeführt werden, vollständig in die beiden Bauteile eingetrieben wird.

## Revendications

1. Procédé d'établissement d'une liaison entre deux composants (2, 4) dans une région d'assemblage au moyen d'un clou (6a-i), qui présente une tête de clou (8 ; 8f ; 8g ; 8h) avec une rainure circulaire (22 ; 22h) prévue sur la face inférieure de la tête, une tige de clou (10a-i) et une pointe de clou (12 ; 12i), procédé selon lequel le clou est enfoncé dans les composants axialement essentiellement sans rotation à grande vitesse par un outil de pose de sorte que la pointe de clou traverse le composant côté tête de clou (2) et pénètre dans le composant opposé à la tête de clou (4) non pré-poinçonné dans la région d'assemblage et une déformation du matériau qui fait saillie dans la rainure circulaire de la tête de clou est ainsi réalisée dans le composant côté tête de clou (2),
**caractérisé en ce que**
le processus d'enfoncement a lieu de telle manière
que dans le composant côté tête de clou (2) non pré-poinçonné dans la région d'assemblage est réalisé un entassement de matériau (38, 38h) en forme de bourrelet qui forme la déformation de matériau faisant saillie dans la rainure circulaire de la tête de clou, et
la pointe de clou traversant complètement les deux composants ressort au-delà du composant opposé à la tête de clou (4) et un entassement de matériau (40) en forme de cratère, qui fait saillie dans la direction opposée à la tête de clou est réalisé dans le composant opposé à la tête de clou (4).

2. Procédé selon la revendication 1, **caractérisé en ce que** le volume de la rainure circulaire (22) correspond essentiellement au volume de l'entassement de matériau (38) du composant côté tête de clou (2).

3. Procédé selon la revendication 1 ou 2, **caractérisé en ce que** la rainure circulaire (22) présente adjacente à la tige de clou (10a-f) une surface arrondie (24) qui se transforme en une surface conique (26).

4. Procédé selon l'une des revendications précédentes, **caractérisé en ce que** la tige de clou (10a, b, e, f) est formée essentiellement de forme cylindrique.

5. Procédé selon l'une des revendications 1 à 3, **caractérisé en ce que** la tige de clou (10c) est formée en direction de la tête de clou (8) de manière convergente.

6. Procédé selon l'une des revendications 1 à 3, **caractérisé en ce que** la tige de clou (10d) est formée en direction de la tête de clou (8) de manière divergente.

7. Procédé selon l'une des revendications précédentes, **caractérisé en ce que** la tige de clou (10a-f) est pourvue d'une structure de surface (28a-f) qui se remplit de matériau déplacé lors de l'établissement de la liaison.

8. Procédé selon la revendication 7, **caractérisé en ce que** la structure de surface (28a-f) n'est disposée que dans une région de la tige de clou (10a-f) qui est située dans la liaison terminée à l'intérieur du composant opposé à la tête de clou (4).

9. Procédé selon la revendication 7 ou 8, **caractérisé en ce que** le rapport entre la profondeur maximale (T) de la structure de surface (28a-f) et le diamètre moyen (D) de la tige de clou (10a-f) est inférieur à 0,1, de préférence inférieur à 0,05 et en particulier inférieur à 0,03.

10. Procédé selon l'une des revendications 7 à 9, **caractérisé en ce que** la structure de surface (28a-d) est constituée en sections axiales d'un profil ondulé arrondi.

11. Procédé selon l'une des revendications 7 à 9, **caractérisé en ce que** la structure de surface (28e) est constituée en sections axiales d'un profil en dents de scie.

12. Procédé selon la revendication 11, **caractérisé en ce que** le profil en dents de scie est orienté de telle façon que chaque dent de scie rétrécit vers la pointe de clou.

13. Procédé selon la revendication 11 ou 12, **caractérisé en ce que** l'enveloppante du profil en dents de scie et le contour de la pointe de clou présentent ensemble en sections axiales un tracé à peu près parabolique.

14. Procédé selon l'une des revendications 7 à 13, **caractérisé en ce que** la structure de surface (28a-e) est formée par une série de creux (30) et bosses (32) circulaires.

15. Procédé selon l'une des revendications 7 à 13, **caractérisé en ce que** la structure de surface (28) est formée par un filetage qui forme lors de l'enfoncement axial du clou dans les deux composants (2, 4) un filetage complémentaire correspondant.

16. Procédé selon la revendication 15, **caractérisé en ce que** le pas du filetage formé par la structure de surface (28f) est inférieur à 0,35 et se trouve de préférence dans l'ordre de grandeur de 0,25.

17. Procédé selon la revendication 15 ou 16, **caractérisé en ce que** la tête de clou (8f) présente un repère d'entraînement (46) pour l'application d'un outil, pour pouvoir retirer de nouveau le clou (6f) des deux composants (2, 4).

18. Procédé selon l'une des revendications précédentes, **caractérisé en ce qu'**entre une partie de la tige de clou (10d; 10g) pourvue d'une structure de surface (28d ; 28g) et la pointe de clou (12), une section (48 ; 50) sans profil est prévue.

19. Procédé selon la revendication 18, **caractérisé en ce qu'**entre une partie de la tige de clou (10g) pourvue d'une structure de surface (28g) et la pointe de clou (12), une section (50) à diamètre réduit est prévue.

20. Procédé selon l'une des revendications précédentes, **caractérisé en ce que** la face supérieure (14) de la tête de clou (8) est plane essentiellement jusqu'à son bord externe, pour transmettre les forces de pose agissant sur la tête de clou (8) dans la position finale du clou en grande partie au composant côté tête de clou (2) et ainsi éviter un percement du clou à travers les deux composants.

21. Procédé selon l'une des revendications précédentes, **caractérisé en ce que** la pointe de clou (12) présente une forme ogivale avec un facteur d'ogivalité de 3 à 5, en particulier de 4.

22. Procédé selon l'une des revendications 1 à 21, **caractérisé en ce que** le clou (6a-f) est fabriqué en une seule pièce en acier ou aluminium ou magnésium ou laiton ou céramique ou en matière plastique renforcée par des fibres.

23. Procédé selon l'une des revendications 1 à 21, **caractérisé en ce que** la tige et la tête du clou sont fabriquées en matériaux de dureté différente et ensuite assemblées l'une avec l'autre.

24. Procédé selon l'une des revendications précédentes, **caractérisé en ce que** le composant côté tête de clou (2) est une tôle relativement mince et le composant opposé à la tête de clou (4) est un composant profilé d'épaisseur plus importante.

25. Procédé selon l'une des revendications précédentes, **caractérisé en ce que** les composants (2, 4) sont constitués d'acier et/ou d'aluminium et/ou de magnésium et/ou de matière plastique.

26. Procédé selon l'une des revendications précédentes, **caractérisé en ce que** les deux composants (2, 4) sont assemblés l'un avec l'autre de manière supplémentaire par collage.

27. Procédé d'établissement de plusieurs liaisons entre deux composants à des points d'assemblage espacés les uns des autres, dans lequel un outil de pose pour poser des clous est déplacé par un robot aux points d'assemblage les uns après les autres, **caractérisé en ce que** le mouvement de l'outil de pose provoqué par le robot vers les points d'assemblage a lieu de manière continue et lors de ce mouvement continu, les clous sont enfoncés dans les deux composants avec le procédé selon l'une des revendications précédentes.

28. Procédé selon l'une des revendications précédentes, **caractérisé en ce que** la tête de clou (8h) est formée en tant que tête fraisée dont la face inférieure présente une section (52) oblique et une petite rainure circulaire (22h) en face de celle-ci de sorte que la tête fraisée pénètre au moins partiellement dans le matériau du composant côté tête de clou (2).

29. Procédé selon l'une des revendications précédentes, **caractérisé en ce que** les composants (2, 4) sont pressés l'un contre l'autre pendant le processus de pose par un serre-flan (44) prévu sur l'outil de pose ou un mécanisme de serrage indépendant de l'outil de pose.

30. Procédé selon l'une des revendications 1 à 29, **caractérisé en ce que** le clou (6, 6a-i) est enfoncé dans les deux composants (2, 4) d'un coup unique de l'outil de pose.

31. Procédé selon l'une des revendications 1 à 29, **caractérisé en ce que** le clou (6, 6a-i) est enfoncé en grande partie dans les deux composants (2, 4) d'un coup unique de l'outil de pose et est enfoncé complètement dans les deux composants avec un ou plusieurs coups supplémentaires, qui sont exécutés manuellement ou mécaniquement.

## Claims

1. Method for establishing a connection between two components (2, 4) in a joining area by means of a nail (6a-i), which has a nail head (8; 8f; 8g; 8h) with a circular groove (22; 22h) provided on the bottom side of the head, a nail shaft (10a-i) and a nail tip (12; 12i), in which the nail is driven mainly free of rotation and axially into the components (2, 4) at a high speed by a setting device, such that the nail tip penetrates through the nail-head-side component (2) and penetrates into the component (4) which is not prepunched in the joining area and is facing away from the nail head and at this a plastic yield is produced in the nail-head-side component (2), which protrudes into the circular groove of the nail head, **characterized in that**
the driving process occurs in the manner that a toric-shaped material bulge (38; 38h) is produced in the nail-head-side component (2) which is not prepunched in the joining area forming the plastic yield which protrudes into the circular groove of the nail head, and
the nail tip fully penetrates through both components and escapes over the component (4) facing away from the nail head and a crater-shaped material bulge (40) is produced in the component (4) facing away from the nail head, which protrudes in the direction facing away from the nail.

2. Method according to claim 1, **characterized in that** the volume of the circular groove (22) mainly matches the volume of the material bulge (38) of the nail-head-side component (2).

3. Method according to claim 1 or 2, **characterized in that** the circular groove (22) has a rounded surface (24) adjacent to the nail shaft (10a-f), which passes in a cone-like surface (26).

4. Method according to one of the previous claims, **characterized in that** the nail shaft (10a, b, e, f) is mainly designed in a cylindrical manner.

5. Method according to one of the claims 1 to 3, **characterized in that** the nail shaft (10c) is designed convergent in the direction of the nail head (8).

6. Method according to one of the claims 1 to 3, **characterized in that** the nail shaft (10d) is designed divergent in the direction of the nail head (8).

7. Method according to one of the previous claims, **characterized in that** the nail shaft (10a-f) is provided with a surface profiling (28a-f), which fills with displaced material during the establishing of the connection.

8. Method according to claim 7, **characterized in that** the surface profiling (28a-f) is arranged only in an area of the nail shaft (10a-f), which lies in the finished connection within the component (4) facing away from the nail head.

9. Method according to claim 7 or 8, **characterized in that** the ratio of the maximum depth (T) of the surface profiling (28a-f) to the average diameter (D) of the nail shaft (10a-f) is less than 0.1, preferably less than 0.05 and in particular less than 0.03.

10. Method according to one of the claims 7 to 9, **characterized in that** the surface profiling (28a-d) in axial sections is made up of a rounded wave-like profile.

11. Method according to one of the claims 7 to 9, **characterized in that** the surface profiling (28e) in axial sections is made up of a sawtooth profile.

12. Method according to claim 11, **characterized in that** the sawtooth profile is aligned such that each sawtooth tapers towards the nail tip.

13. Method according to claim 11 or 12, **characterized in that** the enveloping of the sawtooth profile and the contour of the nail tip together have an almost parabola-like course in axial sections.

14. Method according to one of the claims 7 to 13, **characterized in that** the surface profiling (28a-e) is formed from a series of circular recesses (30) and ridges (32).

15. Method according to one of the claims 7 to 13, **characterized in that** the surface profiling (28) is formed by a thread, which forms a corresponding counter thread during the axial driving of the nail into both components (2, 4).

16. Method according to claim 15, **characterized in that** the incline of the thread formed by the surface profiling (28f) is less than 0.35 and is preferably in the order of magnitude of 0.25.

17. Method according to claim 15 or 16, **characterized in that** the nail head (8f) has a drive characteristic (46) for the engagement of a tool, in order to be able to release the nail (6f) from the two components (2, 4).

18. Method according to one of the previous claims, **characterized in that** a profile-free section (48; 50) is provided between a part of the nail shaft (10d; 10g) provided with a surface profiling (28d; 28g) and the nail tip (12).

19. Method according to claim 18, **characterized in that** a reduced diameter section (50) is provided between a part of the nail shaft (10g) provided with a surface profiling (28g) and the nail tip (12).

20. Method according to one of the previous claims, **characterized in that** the top side (14) of the nail head (8) is mainly even up to its outer edge in order to mainly transfer the setting forces exerted on the nail head (8) in the end position of the nail to the nail-head-side component (2) and to thereby avoid a puncture of the nail through the two components.

21. Method according to one of the previous claims, **characterized in that** the nail tip (12) has an ogival form with an ogivality factor of 3 to 5, in particular 4.

22. Method according to one of the claims 1 to 21, **characterized in that** the nail (6a-f) is made of a single piece of steel or aluminum or magnesium or brass or ceramic or a fiber-reinforced plastic.

23. Method according to one of the claims 1 to 21, **characterized in that** the shaft and the head of the nail are made of materials with different hardnesses and afterwards the shaft and the head are connected to each other.

24. Method according to one of the previous claims, **characterized in that** the nail-head-side component (2) is a relatively thin sheet metal plate and the component (4) facing away from the nail head is a profile component with a larger thickness.

25. Method according to one of the previous claims, **characterized in that** the components (2, 4) are made of steel and/or aluminum and/or magnesium and/or plastic.

26. Method according to one of the previous claims, **characterized in that** the two components (2, 4) are also connected to each other by adhesive bonding.

27. Method for establishing several connections between two components at spaced joining locations, in that a setting device for the setting of nails is moved successively by a robot to the joining locations, **characterized in that** the movement of the setting device to the joining locations performed by the robot takes place continuously and in this continuous movement the nails are driven into the two components with a method according to one of the previous claims.

28. Method according to one of the previous claims, **characterized in that** the nail head (8h) is designed as a countersunk head, the bottom side of which has an inclined section (52) and a small circular groove (22h) opposed thereto so that the countersunk head enters at least partially the material of the nail-head-side component (2).

29. Method according to one of the previous claims, **characterized in that** the components (2, 4) are pushed against each other during the setting process by a hold-down device (44) provided on the setting device or by a tension mechanism that is separate from the setting device.

30. Method according to one of the claims 1 to 29, **characterized in that** the nail (6, 6a-i) is driven into the two components (2, 4) with one single blow of the setting device.

31. Method according to one of the claims 1 to 29, **characterized in that** the nail (6, 6a-i) is mainly driven into the two components (2, 4) with one blow of the setting device and is driven all the way into the two components with one or more additional blows, which are performed manually or mechanically.
